# DEMANDE DE BREVET EUROPEEN

(11) **EP 1 170 921 A1**
(43) Date de publication de la demande: **09.01.2002**
(21) Numéro de dépôt: 00401980.8
(22) Date de dépôt: 07.07.2000
(51) Int. Cl.: H04L 29/06

(54) **Module de sécurité**

(71) Demandeur: ALCATEL, 75008 Paris (FR)
(72) Inventeur: Durand, Romain, 75008 Paris (FR)
(74) Mandataire: Lamoureux, Bernard

(57) **Abrégé**

L'invention est relative à un module de sécurité (30) pour autoriser à une application l'utilisation d'interfaces de logiciels enregistrées dans un terminal (1) de télécommunications. Le module (30) comprend des moyens (32) de détection pour détecter le profil de sécurité dudit terminal (1) de télécommunications, des moyens (34) de sélection pour sélectionner parmi lesdites interfaces de logiciels celles qui sont associées au profil de sécurité détecté du terminal (1), et des moyens (36) de commande d'accès aux interfaces de logiciels pour d'une part autoriser à l'application l'utilisation des interfaces de logiciel sélectionnées et pour d'autre part bloquer pour ladite application l'utilisation des interfaces de logiciel non sélectionnées.

## Description

La présente invention est relative à un module de sécurité pour autoriser à une application l'utilisation d'interfaces de logiciels enregistrées dans un terminal de télécommunications.

Plus généralement, l'invention a trait au domaine de l'accès sécurisé d'une application, en particulier d'une application à valeur ajoutée ( " value add application " en anglais), aux ressources techniques d'un terminal de télécommunications ou aux mémoires d'une carte à puce introduite dans un lecteur de carte à puce d'un terminal de télécommunications.

Généralement, des téléphones mobiles d'aujourd'hui ne sont pas considérés comme présentant eux-mêmes un profil de sécurité suffisamment élevé pour permettre toutes sortes de transactions financières comme par exemple des transactions bancaires ou le téléachat.

C'est pourquoi, toute transaction sensible impliquant une fonction de sécurité pour empêcher la fraude est aujourd'hui généralement réalisée par l'intermédiaire d'une carte à puce insérée dans le terminal.

En particulier pour permettre de passer des transactions très diverses, il a été proposé d'équiper un téléphone mobile de deux lecteurs de carte à puce, l'un pour recevoir une carte d'identification d'abonné également connu au nom de carte SIM (pour "subscriber identity module" en anglais) afin de permettre l'établissement d'une communication avec le réseau de télécommunications, et l'autre pour recevoir une carte à puce dite "d'application" dans laquelle sont stockées des informations particulières d'un utilisateur relatif à une application. Une telle carte d'application est par exemple une carte bancaire, un porte-monnaie électronique, une carte de fidélité ou encore une carte d'abonnement à un service distant pouvant être consulté par l'intermédiaire du terminal de télécommunications.

Toutefois, il s'avère que cette solution présente des inconvénients, en particulier en raison des moyens techniques limités pouvant être mises en oeuvre dans une carte à puce.

En effet, certaines applications plus développées ne peuvent plus se contenter de la capacité de calcul et de mémorisation d'une simple carte à puce et nécessitent de faire intervenir les ressources techniques du téléphone mobile, comme par exemple des moyens de calcul, des moyens mémoire, le clavier ou l'écran d'affichage.

Or, pour pouvoir efficacement empêcher la fraude, il n'est pas envisageable de permettre de passer une transaction sensible, comme une transaction financière, en utilisant les ressources techniques d'un terminal mobile, si celui-ci ne présente pas un profil de sécurité adapté.

Pour pallier cet inconvénient, il est connu de fabriquer des téléphones mobiles dits "infraudables". Il s'agit de terminaux fonctionnant au travers de couches de logiciels de sécurité et possédant au moins un lecteur de carte à puce, un clavier et un écran protégés ainsi qu'un boîtier de terminal inviolable qui rend le terminal inutilisable en cas de tentative d'ouverture du boîtier.

Toutefois, cette solution ne peut pas être étendue à tous les terminaux, en particulier des téléphones mobiles, car c'est une solution complexe et chère.

Comme alternative, il a été proposé de prévoir des terminaux ayant différents niveaux de sécurité contre la fraude.

Ainsi par exemple, un profil de sécurité de niveau "0" correspond à un terminal n'ayant aucun moyen technique de sécurité contre la fraude.

Le niveau "1" correspond par exemple à un terminal fonctionnant au travers de couches de logiciels de sécurité contre la fraude.

Le niveau "2" correspond à un terminal du niveau "1", mais qui comprend en plus un lecteur de carte à puce pour recevoir une carte d'application. Dans le cas d'un téléphone mobile, il s'agira d'un second lecteur de carte à puce, le premier étant celui destiné à recevoir la carte d'identification d'abonné (carte SIM).

Le niveau "3" correspond à un terminal du niveau "2", dont en plus le clavier et l'afficheur sont protégés contre la fraude. La protection du clavier et de l'afficheur sont particulièrement important pour par exemple l'affichage de sommes d'argent à payer et la saisie de codes secrets.

Et puis, le niveau "4" correspond à un terminal infraudable comme décrit ci-dessus, donc un terminal du niveau " 3 " comprenant de plus un boîtier inviolable.

Le niveau de sécurité contre la fraude d'un terminal de télécommunication est déterminé dès sa fabrication et implanté dans celui-ci par exemple sous la forme d'un certificat électronique enregistré dans une mémoire morte ROM.

Lorsque par exemple une application sensible doit être téléchargée d'un serveur distant, le certificat et donc le niveau du profil de sécurité du terminal sont communiqués au serveur distant et celui-ci adapte l'exécution de l'application au niveau du profil de sécurité du terminal.

Toutefois, cette solution présente l'inconvénient que l'on ne peut pas réellement garantir la sécurité contre la fraude lors de l'exécution de l'application au niveau du terminal.

Ainsi, il est possible lorsqu'une une application distante est téléchargée dans un terminal de télécommunications présentant un profil de sécurité du niveau "3", qu'une autre application "pirate" se déroule en parallèle et torpille de manière frauduleuse l'application téléchargée.

En outre, dans le domaine général de sécurité de l'accès à des modules de logiciels dans l'informatique, on recourt de temps en temps à des librairies d'interfaces de logiciel d'accès par exemple à un processeur ou une mémoire.

Par le fait d'interposer une interface sécurisée pour accéder par exemple à un processeur, une mémoire ou un dispositif externe, il est possible d'augmenter le niveau de sécurité contre la fraude.

La présente invention vise à pallier les problèmes de fraude de l'état de la technique en proposant un module de sécurité qui permette d'améliorer la sécurité au niveau d'un terminal de télécommunications lors de l'exécution d'une application dans celui-ci.

A cet effet, l'invention a pour objet un module de sécurité pour autoriser à une application l'utilisation d'interfaces de logiciels enregistrées dans un terminal de télécommunications, caractérisé en ce qu'il comprend des moyens de détection pour détecter le profil de sécurité dudit terminal de télécommunications, des moyens de sélection pour sélectionner parmi lesdites interfaces de logiciels celles qui sont associées au profil de sécurité détecté du terminal et des moyens de commande d'accès aux interfaces de logiciels pour d'une part autoriser à l'application l'utilisation des interfaces de logiciel sélectionnées et pour d'autre part bloquer pour ladite application l'utilisation des interfaces de logiciel non sélectionnées.

De plus, le module de sécurité peut comporter une ou plusieurs des caractéristiques suivantes :
- les moyens de commande d'accès aux interfaces de logiciels sont de plus adaptés pour bloquer pendant les opérations de ladite application l'utilisation des interfaces de logiciel pour toute autre application,
- dans le cas où ladite application posséderait un niveau de confiance déterminé, lesdits moyens de sélection sont de plus adaptés pour sélectionner lesdites interfaces de logiciels en outre en fonction du niveau de confiance de ladite application,
- le module de sécurité est compris dans une carte à puce,
- ladite application est une application liée à un accessoire pouvant être relié audit terminal de télécommunication,
- ledit accessoire est un lecteur de carte à puce sécurisé possédant son propre écran d'affichage et son propre clavier,
- ladite application est une application téléchargée depuis un serveur distant,
- ladite application téléchargée est adaptée pour accéder aux mémoires d'une carte à puce introduite dans un lecteur de carte à puce dudit terminal de télécommunication,
- ladite application est une application de recharge d'un porte-monnaie électronique, une transaction de paiement ou une application pour créditer une carte à puce de points de fidélité.

L'invention a également pour objet un terminal de télécommunication, caractérisé en ce qu'il comporte un module de sécurité tel que décrit ci-dessus.

Ce terminal de télécommunications peut en outre comporter une ou plusieurs des caractéristiques suivantes :
- il comprend un premier lecteur de carte à puce destiné à recevoir une carte d'identification d'abonné et un second lecteur de carte à puce destiné à recevoir une carte à puce comprenant un module de sécurité tel que décrit ci-dessus.
- il est un ordinateur équipé de moyens de télécommunication, un téléphone, notamment un téléphone mobile, de préférence un radiotéléphone cellulaire ou encore une borne d'accès combiné réseau téléphonique/Internet.

L'invention a de plus pour objet un procédé pour autoriser de manière sécurisée à une application l'utilisation d'interfaces de logiciels enregistrées dans un terminal de télécommunications, caractérisé en ce qu'il comprend des étapes suivantes :
- on détecte le profil de sécurité dudit terminal de télécommunications,
- on sélectionne parmi lesdites interfaces de logiciels celles qui sont associées au profil de sécurité détecté du terminal, et
- on commande l'accès aux interfaces de logiciels de manière à d'une part autoriser à l'application l'utilisation des interfaces de logiciel sélectionnées et d'autre part bloquer, pour ladite application, l'utilisation des interfaces de logiciel non sélectionnées.

Le procédé selon l'invention peut en outre présenter une ou plusieurs des caractéristiques suivantes :
- on bloque pendant les opérations de ladite application l'utilisation des interfaces de logiciel pour toute autre application,
- dans le cas où ladite application posséderait un niveau de confiance déterminé, on sélectionne les interfaces de logiciels en outre en fonction du niveau de confiance de ladite application .

D'autres caractéristiques et avantages de l'invention ressortiront de la description suivante, donnée à titre d'exemple, sans caractère limitatif, en regard des dessins annexés sur lesquels :
La figure 1 montre un schéma synoptique d'un système de télécommunications, et
La figure 2 montre un schéma synoptique d'un terminal de télécommunications équipé d'un module de sécurité selon l'invention.

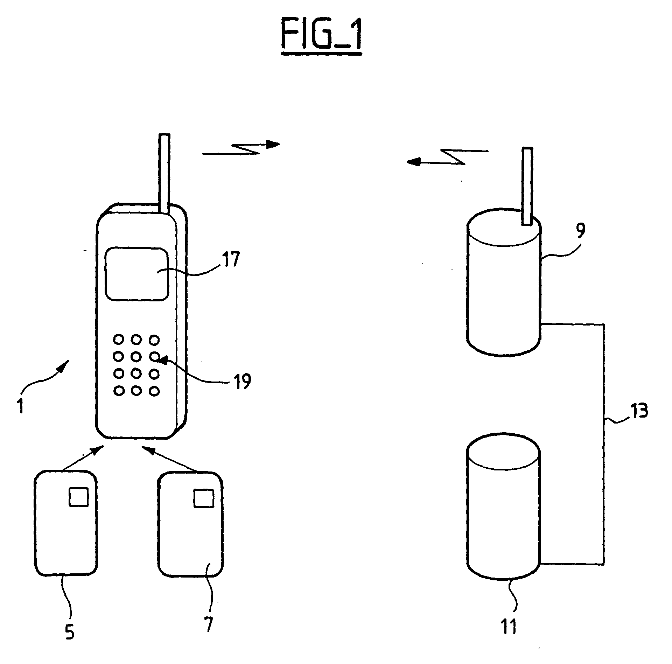

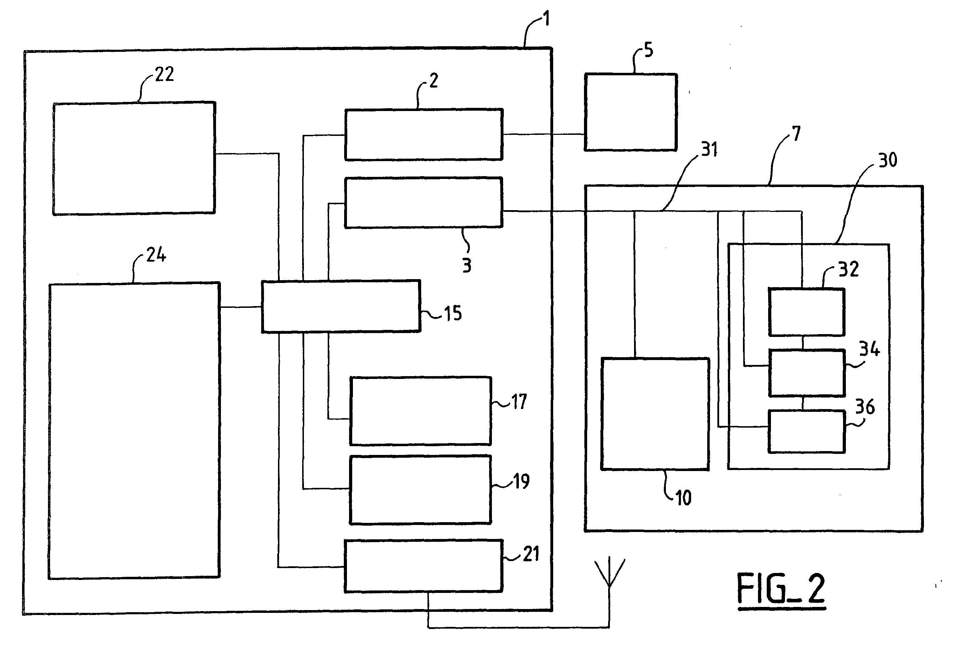

La figure 1 est un schéma synoptique simplifié d'un système de télécommunications et la figure 2 montre un schéma synoptique plus en détail du terminal 1 de télécommunications de la figure 1.

Par " terminal de télécommunications ", on comprend tout équipement terminal d'un réseau de télécommunications comme par exemple un téléphone mobile ou radio-cellulaire, un ordinateur équipé de moyens de télécommunications tel qu'un modem d'accès à un réseau de télécommunications.

Le terme de " terminal de télécommunications " englobe également un minitel et une borne d'accès combiné réseau téléphonique / Internet. Une telle borne d'accès combiné, également connu au nom de "screenphone" (pour "téléphone à écran" en français), est par exemple commercialisée par la Demanderesse au nom de "WEB TOUCH™".

Par la suite, on considérera que le terminal de télécommunications 1 est un téléphone mobile comme cela est représenté schématiquement sur la figure 1.

Le terminal de télécommunications 1 possède un premier 2 et un second 3 lecteurs de cartes à puce (voir figure 2).

Le premier lecteur 2 de carte à puce est adapté pour recevoir une carte 5 d'identification d'abonné également connu au nom de carte SIM (pour "subscriber identity module" en anglais) afin de permettre l'établissement d'une communication avec un réseau de télécommunications. Cette carte 5 d'identification peut avoir le format d'une carte de crédit comme cela est représenté sur la figure 1, ou être une carte "micro-SIM".

Grâce à la carte SIM 5, l'abonné peut s'identifier auprès d'un serveur 9 de l'opérateur du réseau téléphonique auprès duquel l'utilisateur a souscrit un abonnement, et passer des communications. Ce serveur 9 contient une base de données de tous les abonnés et des autorisations d'accès au réseau téléphonique de l'opérateur par l'intermédiaire des cartes SIM.

Le lecteur 3 de carte à puce est adapté pour recevoir une carte à puce 7 dite d' " application ". Dans une telle carte d'applications 7 sont stockées dans une mémoire 10 (voir figure 2) des informations particulières d'un utilisateur relatif à une application qui peut par exemple être une application distante. Dans le cas d'un porte-monnaie électronique par exemple, le crédit sur la carte est stocké dans cette mémoire 10.

Cette carte 7 possède de préférence le format d'une carte de crédit, mais elle peut également avoir le format d'une carte micro-SIM. Cette carte d'application 7 peut par exemple être un porte-monnaie électronique, une carte pour créditer des points de fidélités, ou une carte bancaire.

Grâce à la carte d'applications 7, l'utilisateur du terminal 1 peut télécharger une ou plusieurs applications depuis un serveur distant d'applications 11 appartenant par exemple à une société de vente de produits ou à une banque auprès duquel l'utilisateur du terminal 1 possède un compte bancaire.

Ce serveur 11 peut être appelé par l'abonné depuis son téléphone mobile. Dans ce cas, le serveur de l'opérateur téléphonique 9 de l'opérateur est relié, par exemple par une liaison téléphonique filaire 13 au serveur 11 de la banque.

On se réfère maintenant à la figure 2.

Le terminal 1 de télécommunications est équipé d'une unité centrale 15 pour gérer le fonctionnement du terminal 1. Cette unité centrale 15 comprend par exemple un microprocesseur.

De plus, le terminal 1 comporte, reliés à l'unité centrale 15, un écran d'affichage 17, un clavier 19, des moyens de télécommunications 21 réalisés dans le présent exemple sous forme d'un émetteur / récepteur de téléphone mobile.

Les lecteurs de carte à puce 2 et 3 sont également raccordés à l'unité centrale 15 et les opérations de lecture et d'écriture sur respectivement les cartes à puce 5 et 7 sont gérés par l'intermédiaire de l'unité centrale 15.

Par ailleurs, le terminal 1 comporte une mémoire 22 de certificat. Cette mémoire 22 contient un certificat électronique délivré par un organisme de certification et est relié à l'unité centrale 15. Le certificat électronique comprend, entre autres, un numéro identification unique du terminal 1, son niveau de sécurité ainsi qu'une signature électronique de l'organisme de certification. Avantageusement, cette mémoire est une mémoire morte à masque ROM implanté dans le terminal 1 lors de sa fabrication de sorte que son contenu ne puisse pas être modifié après implantation dans le terminal 1.

De plus, le terminal 1 comporte un mémoire 24 contenant une librairie d'interfaces de logiciel. Avantageusement, cette mémoire 24 est également une mémoire morte à masque ROM implanté dans le terminal 1 lors de sa fabrication. Elle contient des interfaces de logiciel pour communiquer par exemple avec la carte à puce 7 via le lecteur 3, pour permettre à une application distante chargée dans l'unité centrale 15 d'accéder à l'écran 17 ou le clavier 19, ou encore pour communiquer avec un accessoire externe raccordé au terminal 1, comme un lecteur de carte à puce externe sécurisé (non représenté) possédant son propre écran d'affichage et son propre clavier protégés contre la fraude.

La librairie d'interfaces de logiciels de la mémoire 24 se compose d'interfaces de différents niveaux. A titre d'exemple, la librairie de la mémoire 24 possède deux niveaux d'interface, un niveau haut et un niveau bas.

Par une interface de niveau haut, on entend une interface de logiciel qui réalise des fonctionnalités complexes sans donner accès aux fonctionnalités élémentaires du module ou de l'accessoire avec laquelle elle communique.

Par analogie, une interface de niveau bas donne accès aux fonctionnalités élémentaires du module ou l'accessoire avec laquelle elle communique.

Si on prend par exemple des interfaces de logiciel pour accéder à une carte d'application 7 telle qu'un porte-monnaie électronique, une interface de logiciel de niveau haut est par exemple la fonctionnalité "débiter le porte-monnaie électronique d'un montant X ". Cette interface de logiciel ne permet pas d'accéder et de modifier librement des emplacement de mémoire de la carte à puce formant porte-monnaie électronique. Une interface de niveau bas pour la même carte d'application comprend par exemple la fonctionnalité de changer librement certains bits contenus dans la mémoire de la carte 7.

Par une interface de niveau haut, l'accès à la mémoire de la carte d'application est restreint et donc dans une certaine mesure protégé.

En revanche, par une interface de niveau bas, l'accès à la mémoire n'est pas restreint et donc plus vulnérable contre la fraude.

Afin de permettre au terminal 1 de télécommunications un champ d'application le plus large possible, il est nécessaire qu'en fonction du niveau de sécurité du terminal 1, aussi bien des interfaces du niveau haut que celles du niveau bas soient disponibles.

A cet effet, la carte d'applications 7 comprend, outre la mémoire 10 pour des informations relatives à une application, un module de sécurité 30 selon l'invention.

Ce module 30 de sécurité comprend, reliés par l'intermédiaire d'un bus informatique 31 de la carte 7 au lecteur 3 du terminal 1, des moyens 32 de détection pour détecter le profil de sécurité dudit terminal de télécommunications, des moyens 34 de sélection pour sélectionner au moins un niveau d'interface associé au profil de sécurité détecté du terminal 1 et des moyens 36 de commande d'accès aux interfaces de logiciels enregistrées dans la mémoire 24 du terminal.

On décrira les moyens 32, 34 et 36 plus en détail ci-après.

Les moyens 32 de détection sont adaptés pour détecter, par exemple par des échanges de clés de cryptage, le certificat enregistré dans la mémoire 22 de certificat en accédant à cette mémoire 22 via le lecteur 3 et l'unité centrale 15. Bien entendu, ces moyens 32 de détection comprennent également des moyens pour vérifier l'authenticité du certificat détecté.

Les moyens 34 de sélection sont réalisés de manière qu'ils puissent accéder à la mémoire 24 contenant les interfaces de logiciel. Les moyens 34 de sélection reçoivent un signal en sortie des moyens 32 de détection qui est représentatif du niveau de sécurité du terminal 1 de télécommunication, détecté par les moyens 32.

Avantageusement, chaque interface de logiciel est associée à un niveau de profil sécurité d'un terminal de télécommunications 1.

Par exemple, en ce qui concerne les interfaces de logiciels relatives à un porte-monnaie électronique, aucune interface de logiciel de la mémoire 22 est associée à un profil de sécurité des niveaux " 0 " ou " 1 " puisque que l'utilisation d'un porte-monnaie électronique nécessite un lecteur de carte à puce supplémentaire. Un terminal possédant un profil de sécurité des niveaux "0" et "1" ne peut donc pas être utilisé avec un porte-monnaie électronique.

Pour un terminal d'un profil de sécurité du niveau " 2 ", c'est-à-dire un terminal de télécommunications du niveau " 1 " possédant un lecteur de carte à puce supplémentaire (comme le lecteur de carte à puce 7), on prévoit par exemple une interface de logiciel haute ayant la fonctionnalité de pouvoir débiter le porte-monnaie électronique d'un montant plafonné. Cette interface peut donc être utilisée avec toutes les applications distantes chargées à distance et impliquant le paiement d'une somme d'argent, comme par exemple le téléachat de billets de cinéma.

Toutefois, pour des raisons de sécurité des transactions, on ne prévoit aucune interface de logiciel pour les terminaux du niveau " 2 " et inférieur, permettant de recharger le porte-monnaie électronique puisque la recharge d'un porte-monnaie électronique implique l'utilisation d'interfaces de logiciel d'un niveau bas.

Pour recharger son porte-monnaie électronique, un utilisateur d'un terminal de télécommunications d'un profil de sécurité du niveau "2" doit donc utiliser un autre terminal de télécommunication ayant un profil de sécurité d'un niveau plus élevé ou un guichet automatique d'une banque prévu à cet effet.

Des interfaces de logiciel de bas niveau permettant de recharger le porte-monnaie électronique depuis un serveur 11 d'applications distantes d'une banque sont associées à des terminaux présentant un profil de sécurité du niveau " 3 " ou supérieur, donc des terminaux possédant en plus un clavier et un écran d'affichage protégé contre la fraude.

En fonction du résultat de la détection du certificat par les moyens 32, les moyens 34 sélectionnent donc pour l'application chargée dans l'unité centrale 15 parmi les interfaces de logiciels de la mémoire 24 celles qui sont associées au niveau du profil de sécurité du terminal de télécommunications.

Selon une variante avantageuse, les moyens 34 de sélection reçoivent de l'unité centrale via le bus informatique 31 un signal représentatif du niveau de confiance de l'application chargée dans l'unité centrale 15.

Le niveau de confiance d'un logiciel est une mesure permettant de déterminer le degré de protection du logiciel contre la fraude, par exemple par des moyens de cryptage.

Plus le niveau de confiance du logiciel est élevé, plus le logiciel est protégé contre la fraude.

La prise en compte de ce paramètre est avantageux, car pour accroître encore plus la sécurité contre la fraude, on peut prévoir qu'une application ayant un niveau de confiance faible ne peut pas accéder à des interfaces de logiciels normalement prévues pour un niveau de sécurité du terminal de télécommunications.

Les moyens 36 de commande d'accès reçoivent des moyens 34 de sélection un signal représentatif des interfaces de logiciel sélectionnées. Ces moyens 36 sont adaptés pour d'une part autoriser à une application qui est par exemple téléchargée dans l'unité centrale 15 depuis le serveur distant 11, l'utilisation des interfaces de logiciel sélectionnées et pour d'autre part bloquer pour ladite application l'utilisation des interfaces de logiciel non sélectionnées. De plus, ces moyens 36 sont adaptés pour bloquer, pendant les opérations de ladite application précitée, l'utilisation des interfaces de logiciel pour toute application autre que l'application chargée dans l'unité centrale 15.

C'est donc par l'action du module de sécurité 30 dans son ensemble et celle des moyens 36 de commande d'accès en particulier, que l'accès sécurisé par exemple à une carte d'application 7 est garanti.

Par la suite, on présentera un exemple lié à un porte-monnaie électronique pour illustrer le fonctionnement du module de sécurité selon l'invention lors du paiement par exemple d'un achat avec un porte-monnaie électronique.

Un utilisateur souhaite acheter des billets de cinéma par l'intermédiaire de son téléphone mobile possédant deux lecteurs de carte à puce et un profil de sécurité de niveau "2" tel que défini dans le préambule de la présente description. A cet effet, il compose un numéro de téléphone pour charger depuis un serveur distant d'une société de cinémas une application permettant de sélectionner le film, son lieu de projection, la séance et le nombre de billets à acheter ainsi que de procéder au paiement des billets.

Ensuite, pour le paiement des billets, une interface de logiciel de la mémoire 24 est nécessaire pour communiquer avec le porte-monnaie électronique 7, car l'opération de paiement fait intervenir les ressources techniques du terminal, à savoir l'écran 17, en particulier pour l'affichage du montant à payer, et le clavier 19 pour valider le paiement.

Par conséquent, avant que l'opération de paiement puisse avoir lieu, le module de sécurité 30 compris dans la carte 7 définit et garantit l'accès aux interfaces de la mémoire 24.

A cet effet, via le lecteur de carte à puce 3, les moyens 30 de détection détectent et vérifient le certificat chargé dans la mémoire de certification 22 et transmettent le résultat aux moyens 34 de sélection.

Comme le niveau de sécurité du terminal de télécommunications 1 n'est pas très élevé, les moyens 34 de sélection choisissent dans la mémoire 24 une interface de logiciel d'un niveau haut appelé par exemple "débit du porte-monnaie électronique ". Cette interface de logiciel permet en particulier de débiter le porte-monnaie d'une somme plafonné à un certain montant en décrémentant la somme d'argent enregistrée dans la mémoire 10, d'afficher le montant à débiter sur l'écran du terminal et de valider le paiement de la somme par appui sur une touche du clavier.

Ce sont les moyens 36 de commande d'accès qui permettent à l'application d'accéder à cette interface de logiciel mentionnée ci-dessus.

En même temps, lors de l'exécution de cette seconde application, les moyens 36 de commande d'accès bloquent l'utilisation, pour la seconde application, des autres interfaces non sélectionnées contenues dans la mémoire 24 comme les interfaces d'un niveau bas. De plus, les moyens 36 bloquent l'accès aux interfaces de logiciel contenues dans la mémoire 24 pour toute application autre que l'application "débit du porte-monnaie électronique".

Bien entendu, le recours à une interface de logiciel de la mémoire 24 est obligatoire pour accéder à la mémoire 10 du porte-monnaie électronique 7.

Ainsi, on comprend que le module de sécurité contenu dans le porte-monnaie électronique permet de garantir l'accès aux mémoires de cette carte à puce et du niveau du profil de sécurité du terminal de télécommunications.

En revanche, si l'utilisateur souhaite accéder avec son terminal possédant un profil de sécurité de niveau "2" à un serveur distant de sa banque pour recharger son porte-monnaie électronique, il pourrait charger l'application dans l'unité centrale 15, mais il ne peut pas l'exécuter, car le module de sécurité 30 bloquerait l'accès aux interfaces de logiciel nécessaires pour cette opération de recharge en raison d'un niveau de sécurité du terminal insuffisant.

Cet utilisateur devrait donc recharger son porte-monnaie électronique soit par l'intermédiaire d'un terminal ayant un profil de sécurité du niveau requis afin que l'application distante puisse accéder aux interfaces de logiciels nécessaires pour le fonctionnement de l'application, soit par l'intermédiaire par exemple d'un guichet automatique de sa banque prévu à cet effet.

Selon ce qui précède, l'application est une application téléchargée depuis un serveur distant. Mais bien entendu, cette application peut également être une application associée à un accessoire raccordé au terminal de télécommunications.

Ainsi par exemple pour un téléphone mobile n'ayant qu'un lecteur de carte à puce destiné à recevoir une carte d'identification d'abonné, cet accessoire peut par exemple être un lecteur sécurisé externe de cartes à puce, en particulier pour des cartes d'application. De préférence, un tel lecteur externe possède son propre écran d'affichage et son propre clavier protégés contre la fraude.

Selon un autre développement de l'invention, le module de sécurité est compris dans le terminal de télécommunications ou encore dans la carte SIM 5.

## Revendications

1. Module de sécurité (30) pour autoriser à une application l'utilisation d'interfaces de logiciels enregistrées dans un terminal de télécommunications (1), **caractérisé en ce qu'**il comprend des moyens (32) de détection pour détecter le profil de sécurité dudit terminal de télécommunications (1), des moyens (34) de sélection pour sélectionner parmi lesdites interfaces de logiciels celles qui sont associées au profil de sécurité détecté du terminal (1) et des moyens (36) de commande d'accès aux interfaces de logiciels pour d'une part autoriser à l'application l'utilisation des interfaces de logiciel sélectionnées et pour d'autre part bloquer pour ladite application l'utilisation des interfaces de logiciel non sélectionnées.

2. Module de sécurité selon la revendication 1, **caractérisé en ce que** les moyens (36) de commande d'accès aux interfaces de logiciels sont de plus adaptés pour bloquer pendant les opérations de ladite application l'utilisation des interfaces de logiciel pour toute autre application.

3. Module de sécurité selon la revendication 1 ou 2, dans lequel ladite application possède un niveau de confiance déterminé, **caractérisé en ce que** lesdits moyens (34) de sélection sont de plus adaptés pour sélectionner lesdites interfaces de logiciels en outre en fonction du niveau de confiance de ladite application prédéterminé.

4. Module de sécurité selon l'une quelconque des revendications 1 à 3, **caractérisé en ce qu'**il est compris dans une carte à puce (7).

5. Module de sécurité selon l'une quelconque des revendications 1 à 4, **caractérisé en ce que** ladite application est une application liée à un accessoire pouvant être relié audit terminal de télécommunication.

6. Module de sécurité selon la revendication 5, **caractérisé en ce que** ledit accessoire est un lecteur de carte à puce sécurisé possédant son propre écran d'affichage et son propre clavier.

7. Module de sécurité selon l'une quelconque des revendications 1 à 4, **caractérisé en ce que** ladite application est une application téléchargée depuis un serveur distant.

8. Module de sécurité selon la revendication 7, **caractérisé en ce que** ladite application téléchargée est adaptée pour accéder aux mémoires d'une carte à puce introduite dans un lecteur (3) dudit terminal de télécommunication (1).

9. Module de sécurité selon la revendication 8, **caractérisé en ce que** ladite application est une application de recharge d'un porte-monnaie électronique, une transaction de paiement ou une application pour créditer une carte à puce de points de fidélité.

10. Terminal de télécommunication (1), **caractérisé en ce qu'**il comporte un module de sécurité selon l'une quelconque des revendications 1 à 9.

11. Terminal de télécommunications selon la revendication 10, **caractérisé en ce qu'**il comprend un premier (2) lecteur de carte à puce (5) destiné à recevoir une carte d'identification d'abonné (5) et un second (3) lecteur de carte à puce destiné à recevoir une carte à puce (7) comprenant un module de sécurité selon la revendication 4.

12. Terminal de télécommunication selon la revendication 10 ou 11, **caractérisé en ce qu'**il est un ordinateur équipé de moyens de télécommunication, un téléphone, notamment un téléphone mobile, de préférence un radiotéléphone cellulaire, ou encore une borne d'accès combiné réseau téléphonique/Internet.

13. Procédé pour autoriser de manière sécurisée à une application l'utilisation d'interfaces de logiciels enregistrées dans un terminal de télécommunications (1), **caractérisé en ce qu'**il comprend des étapes suivantes:
- on détecte le profil de sécurité dudit terminal de télécommunications (1),
- on sélectionne parmi lesdites interfaces de logiciels celles qui sont associées au profil de sécurité détecté du terminal, et
- on commande l'accès aux interfaces de logiciels de manière à d'une part autoriser à l'application l'utilisation des interfaces de logiciel sélectionnées et d'autre part bloquer pour ladite application l'utilisation des interfaces de logiciel non sélectionnées.

14. Procédé de sécurité selon la revendication 13, **caractérisé en ce que** on bloque pendant les opérations de ladite application l'utilisation des interfaces de logiciel pour toute autre application.

15. Procédé de sécurité selon la revendication 13 ou 14, dans lequel ladite application possède un niveau de confiance déterminé, **caractérisé en ce que** l'on sélectionne les interfaces de logiciels en outre en fonction du niveau de confiance de ladite application .
